(19) Europäisches Patentamt
European Patent Office
Office européen des brevets

(11) **EP 1 477 940 B1**

(12) **EUROPEAN PATENT SPECIFICATION**

(45) Date of publication and mention of the grant of the patent:
**01.08.2007 Bulletin 2007/31**

(51) Int Cl.:
*G06K 19/06* (2006.01)    *G06K 7/14* (2006.01)
*G07D 7/20* (2006.01)    *G07D 7/12* (2006.01)
*B42D 15/00* (2006.01)    *H03M 13/15* (2006.01)

(21) Application number: **04462004.5**

(22) Date of filing: **30.01.2004**

(54) **Authentication method and system**

Authentifizierungsverfahren und -vorrichtung

Procédé d'authentification et son système

(84) Designated Contracting States:
**AT BE BG CH CY CZ DE DK EE ES FI FR GB GR HU IE IT LI LU MC NL PT RO SE SI SK TR**

(43) Date of publication of application:
**17.11.2004 Bulletin 2004/47**

(73) Proprietor: **Hewlett-Packard Development Company, L.P.**
**Houston, TX 77070 (US)**

(72) Inventor: **Attila, Haraszti**
**Budapest, 1141 (HU)**

(74) Representative: **Marsh, David John et al**
**Hewlett-Packard Limited**
**Intellectual Property Section**
**Filton Road**
**Stoke Gifford, Bristol BS34 8QZ (GB)**

(56) References cited:
**WO-A-01/57831**      **WO-A-02/50790**

EP 1 477 940 B1

## Description

### Field of the invention

The present invention relates to the field of authentication techniques, and more particularly without limitation, to authentication of customer cards, financial transaction cards and copy protection.

### Background and prior art

Various sealing and printing techniques to provide authentication and to avoid unauthorised replication of products and documents are known from the prior art. However, an increasing economic damage results from forgery due to insufficient security.

For authenticating documents and things U.S. Pat. No. 5,145,212 teaches the use of non-continuous reflective holograms or diffraction gratings. Such a hologram or diffraction grating is firmly attached to a surface that contains visual information desired to be protected from alteration. The reflective discontinuous hologram is formed in a pattern that both permits viewing the protected information though it and the viewing of an authenticating image or other light pattern reconstructed from it in reflection. In another specific authentication application of this U.S Patent a non-transparent structure of two side-by-side non-continuous holograms or diffraction patterns, each reconstructing a separate image or other light pattern, increases the difficulty of counterfeiting the structure.

PCT application WO087/07034 described holograms, including diffraction gratings, that reconstruct an image which changes as the hologram is tilted with respect to the viewer and in a manner that images reconstructed from copies made of the hologram in monochromatic light do not have that motion.

In UK Patent Application GB 2 093 404 sheet material items which are subject to counterfeiting have an integral or bonded authenticating device which comprises a substrate having a reflective diffractive structure formed as a relief pattern on a viewable surface thereon and a transparent material covering the structure. Specified grating parameters of the diffractive structure result in peculiar, but easily discernable, optical colour properties that cannot be copied by colour copying machines.

U.S. Pat. No. 4,661,983 described a random-pattern of microscopic lines or cracks having widths in the order of micrometers that inherently forms in a dielectric coating of an authenticating device incorporated in a secure document. It permits identification of a genuine individual document by comparing read-out line-position information derived by microscopic inspection with read-out digital codes of line-information obtained earlier at the time of fabrication of the document.

US Patent No. 5,856,070 shows an authentication label containing a light diffracting structure. Unique parameters are randomly defined in the light diffracting structure by anisotropic process steps not under full control of the producer during the manufacturing of the diffracting structure to prevent copying or creating an exact replica thereof. The resultant uniquely coloured authenticating pattern can be verified by simple observation with the naked eye.

US Patent No. 4,218,674 shows an authentication method and system that uses an object being of base material having random imperfections. The random imperfections are converted into pulses along a pre-determined measuring track over the surface of the object of base material.

WO 01/57831 A1 represents the basis for the preambles of claims 1 and 17. It discloses a method for reading single volume and non-reproducible identification means comprising a mixture of at least two materials distinguishable from each other, characterised in that it consists in recognizing in two dimensions the internal heterogeneous structure of the identification means and in isolating and demonstrating its third dimension.

WO 02/50790 A1 discloses a method including making a plurality of security tags, each of which includes a plurality of particles randomly distributed in a light transmitting matrix, providing a reader which includes a means for causing light of one or more wavelengths to impinge on a security tag, and means for interpreting the light reflected and/or refracted and/or diffracted by the particles in the matrix.

In accordance with the invention, there is provided a method of determining the authenticity of an object, as claimed in claim 1.

In accordance with the invention, there is further provided an electronic device for determining the authenticity of an object, as claimed in claim 17.

### Brief description of the drawings

In the following, preferred embodiments of the invention will be described, by way of example only, and with reference to the drawings, in which:

Figure 1        is illustrative of a first embodiment of an authentication label,

Figure 2     is illustrative of a second embodiment of an authentication label,

Figure 3     is a flow chart for generating an authentication code for an authentication label,

Figure 4     is a flow chart for generating an authentication code by encrypting binary data,

Figure 5     illustrates the result of the encryption of figure 4,

Figure 6     is a flow chart for generating the authentication code by means of a pseudo random number generator,

Figure 7     is a block diagram of an image processing and encoding apparatus for generating an authentication code for an authentication label,

Figure 8     is illustrative of a grid that is used for filtering an image,

Figure 9     is a flow diagram for determining the authenticity of an authentication label,

Figure 10     is a flow diagram for determination of the authenticity of an authentication label by decrypting the binary data,

Figure 11     is a flow diagram for performing the method of figure 10 by means of a pseudo random number generator,

Figure 12     is illustrative of a method for determining if the authentication label has a three-dimensional pattern of distributed particles,

Figure 13     is illustrative of an alternative method for determining if the authentication label has a three-dimensional pattern of distributed particles,

Figure 14     is illustrative of a further alternative method for determining if the authentication label has a three-dimensional pattern of distributed particles,

Figure 15     shows an optical recording medium with an attached or integrated authentication label,

Figure 16     shows a block diagram of a reader for the optical recording medium of figure 15.

**Detailed description**

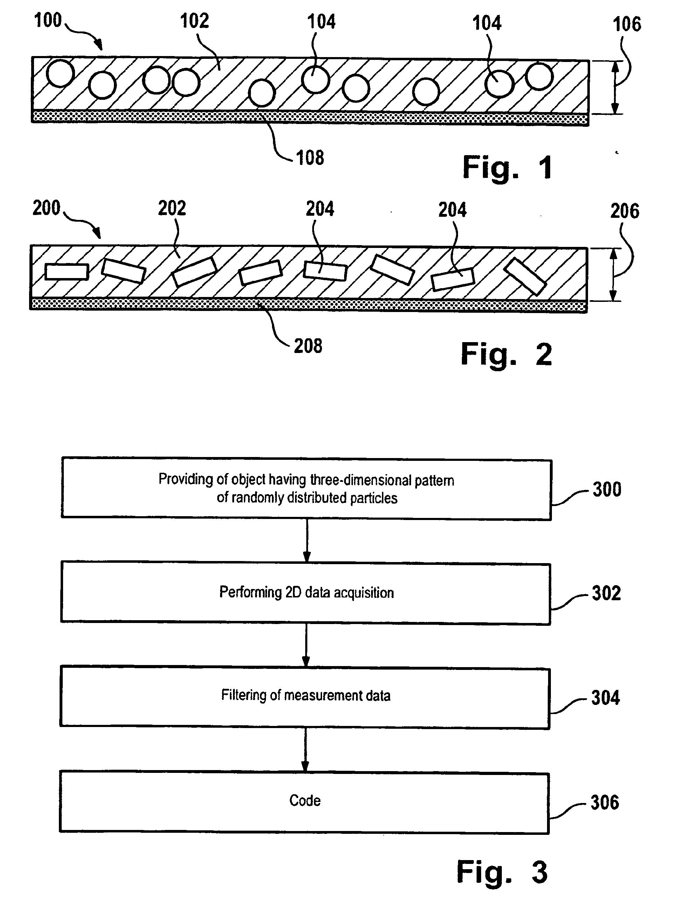

Figure 1 shows authentication label 100. Authentication label 100 has carrier layer 102 with embedded particles 104. The particles 104 are randomly distributed with carrier layer 102, such that the positions of the particles 104 within carrier layer 102 define a random three-dimensional pattern.

Carrier layer 102 consists of a translucent or transparent material, such as a synthetic resin or transparent plastic material, which enables to optically determine the positions of particles 104. For example, carrier layer 102 has a thickness 106 of between 0,3 to 1 mm or any other convenient thickness.

Particles 104 can be glass beads or balls, or disks, metallic or pearlescent pigments with or without a light reflecting coating or any other convenient form or type of particle. The particles can be optically detected due to their reflective coating, or in the absence of such reflective coating, due to their reflection coefficient, which is different to the material of the carrier layer 102. Preferably particles 104 are 5 to 200 micrometers in diameter. For example, particles 104 can be optical lens elements to provide the authentication label 100 with a reflective effect.

Preferably authentication label has adhesive layer 108 in order to glue authentication label 100 to a product of document. The material properties of carrier layer 102 and adhesive layer 108 are chosen such that an attempt to remove authentication label 100 from the product or document would result in destruction of authentication label 100.

Figure 2 shows an alternative embodiment, where like reference numerals are used to designate like elements as in figure 1. In the embodiment of figure 2 particles 204 within carrier layer 202 of authentication label 200 are metallic or pearlescent pigments. Again the thickness 206 of carrier layer 202 is about 0,3 to 1 mm or any other convenient thickness.

For example, authentication label 200 has the size of a post stamp, which is 3 x 4 mm and contains about two hundred particles 204. The random distribution of the two hundred particles within carrier layer 202 provides a sufficient uniqueness of authentication label 200.

Figure 3 shows a flow chart for generating an authentication code on the basis of an authentication object, such as an authentication label as described in figures 1 and 2.

In step 300 an authentication object having a three-dimensional pattern of randomly distributed particles is provided. For example, the authentication object is a piece of scotchlite tape, which is commercially available from 3M.

In step 302 a two-dimensional data acquisition step is performed. This can be done by acquiring a two-dimensional image of a surface of the authentication object. Alternatively the authentication object is scanned in two-dimensions by other measurement means. For example, if the particles that are distributed in the object are magnetic a magnetic head can be used for performing the two-dimensional data acquisition.

The measurement data that results from the two dimensional data acquisition performed in step 302 is filtered in step 304. Preferably the measurement data are low pass filtered. For example, measurement data acquired from the same region of the surface of the authentication object are averaged. These regions are predetermined by a virtual grid.

In step 306 the authentication code is provided.

In order to perform an authentication of the authentication object, steps 300 to 306 are performed again. The object is authentic if the following two conditions are fulfilled,

(i) the particles are randomly distributed in three dimensions within the object, and

(ii) the resulting codes are identical.

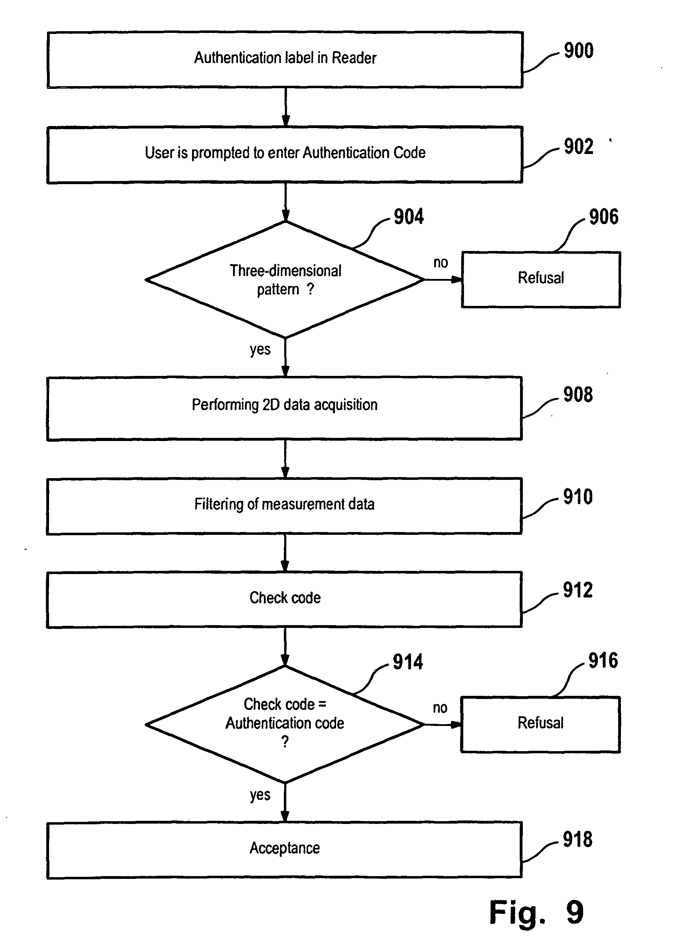

This will be explained in greater detail below by making reference to figure 9.

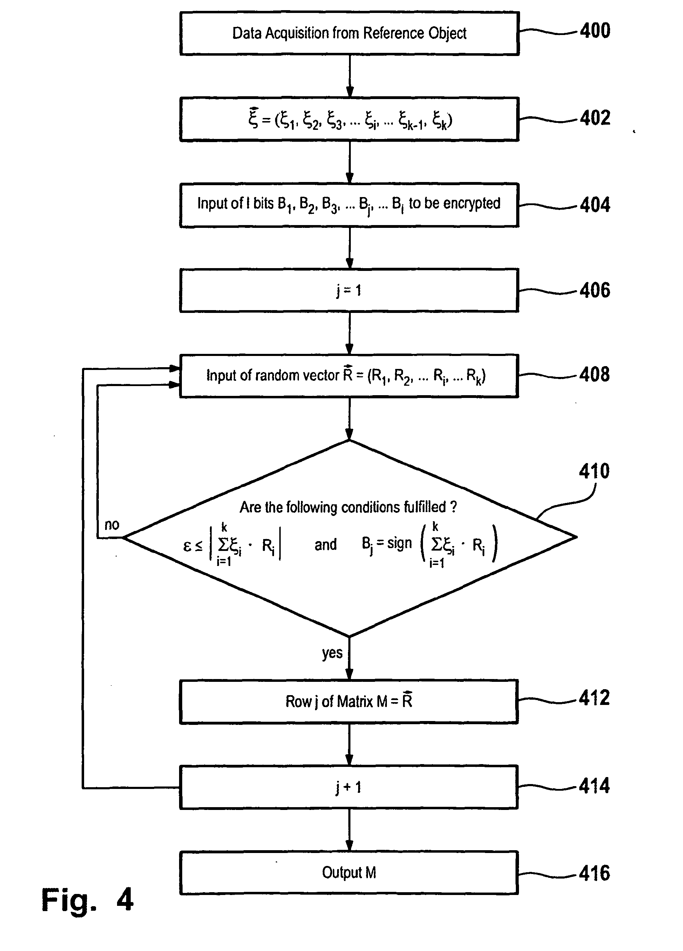

Figure 4 shows an alternative flow chart for providing the authentication code. The authentication code is provided by encryption of I bits of binary data $B_1$, $B_2$, $B_3$, ..., $B_j$,... $B_I$. A reference authentication object, such as an authentication label as described in figures 1 and 2, is used as a basis for the encryption.

Depending on the kind of reference object a data acquisition step is performed (step 400). This way the reference data vector $\vec{\xi}$ is obtained (step 402) that has a number of k values obtained from the reference data object.

Preferably there is some kind of filtering of the raw data acquired from the reference object in order to provide the reference data vector $\vec{\xi}$. For example, the raw data is filtered by a low pass filter for increased robustness of the encoding and decoding method.

Further, it is useful to normalize the data vector data vector $\vec{\xi}$. This way all values $\xi_i$ are within a defined range, such as between [-1; 1].

In step 404 the I bits to be encrypted are entered. In step 406 the index j is initialised. In step 408 a first candidate random vector $\vec{R}$ is generated by means of a random number generator. The random vector $\vec{R}$ has the same dimension k as the reference data vector $\vec{\xi}$.

In step 410 the scalar product of the reference data vector and the candidate random vector is calculated. If the absolute value of this scalar product is above a predefined threshold level $\varepsilon$ a first condition is fulfilled. If the sign of the scalar product matches the bit $B_j$ to be encoded this means that the candidate random vector can be accepted for encoding of bit $B_j$.

For example of the bit $B_j$ is '0' the sign of the scalar product needs to be '-' and if $B_j = 1$ then the sign of the scalar product needs to be '+'.

In other words the candidate random vector $\vec{R}$ is accepted for encrypting bit $B_j$ if both of the following conditions are met:

$$\text{(i)} \qquad \varepsilon \le \left| \sum_{i=1}^{k} \xi_i \cdot R_i \right|$$

and
$$\text{(ii)} \qquad B_j = sign\left( \sum_{i=1}^{k} \xi_i \cdot R_i \right).$$

If one of the conditions (i) and (ii) is not fulfilled the control goes back to step 408 for generation of a new candidate random vector which is then tested against the two conditions (i) and (ii) in step 410. Steps 408 and 410 are carried out repeatedly until a candidate random vector has been found that fulfils both of the conditions of step 410. The accepted candidate random vector constitutes row j of matrix M (step 412). In step 414 index j is implemented and the control goes back to step 408 for encoding of the next bit $B_j$ of the l bits to be encrypted.

After encryption of all l bits the control goes to step 416 where the matrix M is outputted as a result of the encryption.

It is to be noted that the choice of threshold s is a trade off between security, measurement tolerance and processing time. Increasing $\varepsilon$ increases the average number of attempts for finding an acceptable candidate random vector but also increases the acceptable measurement tolerance. Decreasing $\varepsilon$ increases the security level and decreases the processor power requirement, but decreases the acceptable measurement tolerance. A convenient choice for $\varepsilon$ is 1, 2, 3, 4, 5, or 6, preferably between 3 and 4, most probably $\varepsilon = 3.7$ if the reference data vector dimension (k) is 256 and the required measurement tolerance is 5%.

In any other cases a good choice for $\varepsilon$ is

$$\varepsilon = 8*T*sqrt(k/3)$$

where T is the required measurement tolerance (5% is T=0.05) and k is the reference data vector dimension and sqrt () function is the normal square root function.

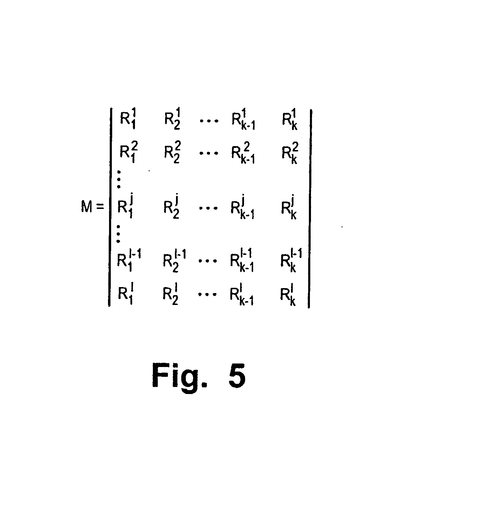

Figure 5 shows the resulting matrix M that has a number of l rows and k columns. Each row j of matrix M is assigned to one of the bits $B_j$ and contains the random vector that encodes the respective bit $B_j$.

Decryption of matrix M in order to recover the encrypted bits is only possible if the decryptor is in the possession of the reference object that was used for the encryption (cf. Step 400 of Fig. 4) as the reference data vector $\vec{\xi}$ is not stored in the matrix M or elsewhere.

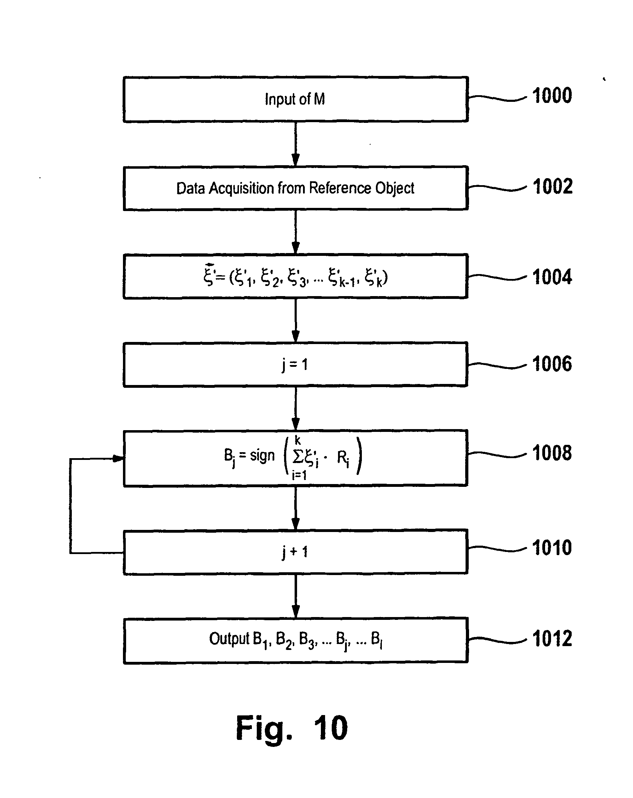

A corresponding decryption method is explained in greater detail below by making reference to figure 10.

For example, the resulting matrix M is stored by printing a bar code on a secure document carrying the authentication object. Alternatively or in addition the matrix M can also be stored electronically in case the secure document has an electronic memory.

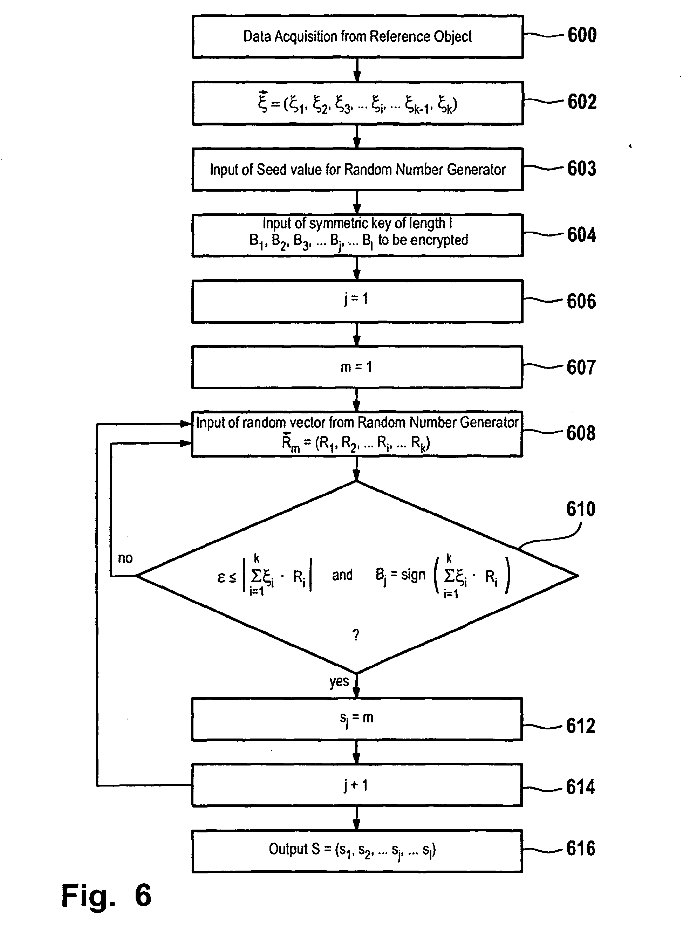

Figure 6 shows a preferred embodiment of the encryption method of figure 4 that enables to compress the result of the encryption operation. Steps 600 and 602 are identical to steps 400 and 402 of figure 4. In step 603 a seed value for the pseudo random number generator is entered. In step 604 a symmetric key having a length l is entered. This corresponds to step 404 of figure 4. In addition to the initialisation of index j in step 606 (corresponds to step 406 of figure 4) index m is initialised in step 607. Index m is the running index of the random number generator.

In step 608 the first random vector $\vec{R}_{m=1}$ of k random numbers $R_i$ is generated by the pseudo random number generator on the basis of the seed value. This candidate random vector is evaluated in step 610 in the same way as in step 410 of figure 4. In case the candidate random vector $\vec{R}_{m=1}$ is accepted as it fulfils the conditions of step 610 only the running index m is stored in step 612 as an element of the sequence S that results from the encryption.

Step 614 corresponds to step 414. In step 616 the sequence S containing a number of l running indices is outputted rather than a matrix M having a number of l x k random numbers. Hence, by storing the running indices and the seed value rather than the random vectors themselves a drastic compression of the result of the encoding operation is obtained.

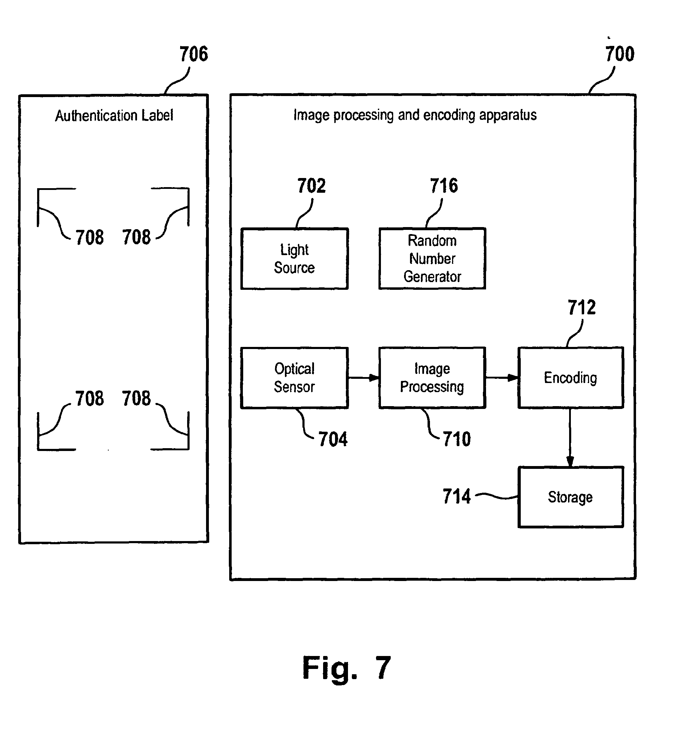

Figure 7 shows a block diagram of an image processing and encoding apparatus 700. image processing and encoding apparatus 700 has light source 702 and optical sensor 704 for taking an image of authentication label 706. For example, authentication label 706 has a similar design as authentication label 100 (cf. figure 1) and authentication label 200 (cf. figure 2). In addition, authentication label 706 has position markers 708 that relate authentication label 706 to a reference position.

Optical sensor 704 is coupled to image processing module 710. Image processing module 710 has an image processing program that can filter the image data required by optical sensor 704.

Image processing module 710 is coupled to encoding module 712. Encoding module 712 receives the filtered measurement data from image processing module 710. Encoding module 712 is coupled to a storage 714 in order to store the result of the encoding for later usage. For example, the image processing and encoding is done for a sequence of authentication labels for the purpose of mass production of data carriers, passports, bank cards, or other secure documents.

In this case a sequence of authentication codes is stored in storage 714 during the mass production. These authentication codes can be printed and mailed to the users independently from the mailing of the authentication labels 706. For example, the authentication label 706 are attached to customer cards or financial transaction cards, such as ATM-cards, that are mailed to the customers. The customers receive the corresponding authentication codes by separate mail.

Preferably image processing and encoding apparatus 700 has random number generator 716. Preferably random number generator 716 is a pseudo random number generator.

Preferably image processing module 710 delivers reference data vector $\vec{\xi}$ (cf. step 402 of figure 4 and step 602 of figure 6). Encoding module 712 performs steps 406 to 416 of figure 4, or if random number generator 716 is a pseudo random number generator, steps 606 to 616 of figure 6. The resulting matrix M or sequence S is stored in storage 714.

As a matter of principle the I bits $B_1$, $B_2$, $B_3$, ... $B_1$ that are encrypted by encoding module 712 can be of any kind. For example the ASCII code of a user name or other personal data is encrypted. Alternatively a random number such as a pin code that is only known by the user is encrypted.

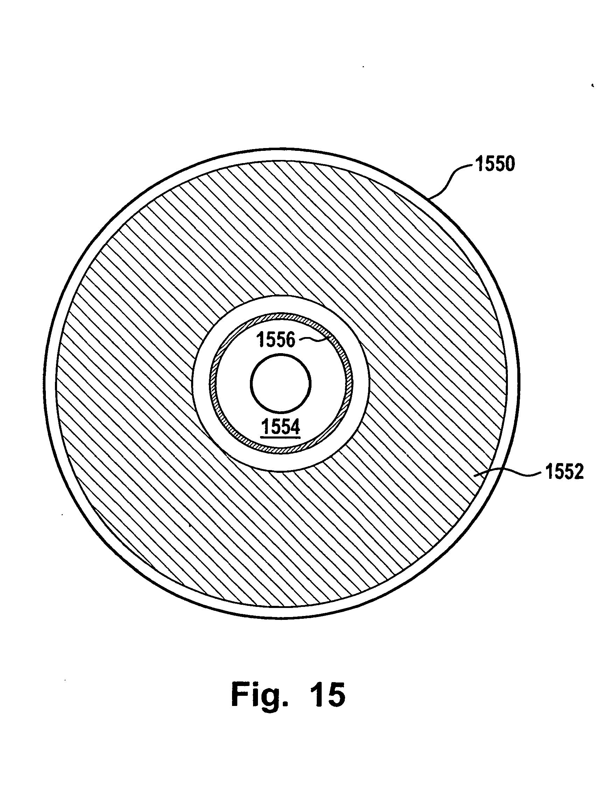

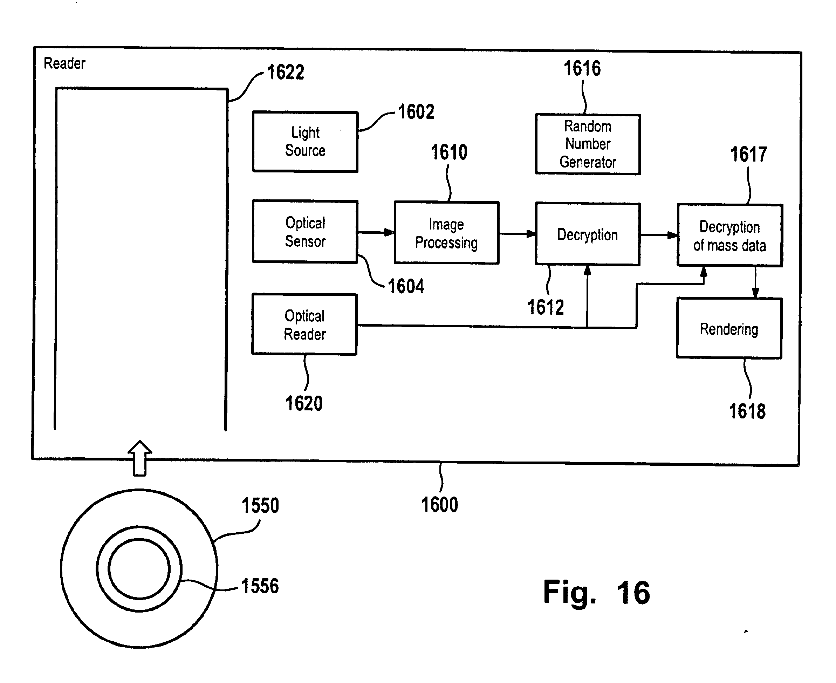

As a further alternative a symmetric key is encrypted. The symmetric key is used for encryption of mass data stored on a data carrier. Decryption of the mass data is only possible by an authorised user who is in possession of the authentication label 706 and matrix M or sequence S depending on the implementation. The later application is particularly useful for the purpose of copy protection as it will be explained in greater detail below by making reference to figures 15 and 16.

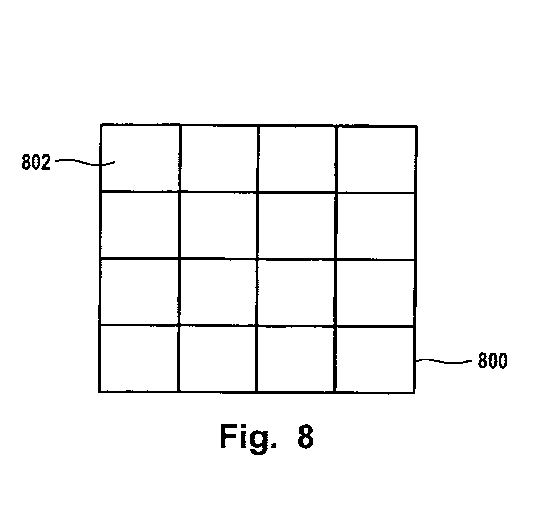

Figure 8 shows grid 800 that has grid elements 802. Grid 800 can be used by image processing module 710 (cf. figure 7) for the purpose of filtering image data acquired by optical sensor 704. For example image processing module 710 calculates a normalised average grey value for each one of the grid elements 802. The normalised and averaged grey values provide the reference data vectors $\vec{\xi}$ for the encryption and $\vec{\xi}'$ for the decryption. It is to be noted that various other image processing and filtering procedures can be employed to provide the reference data vectors on the basis of the image data acquired by optical sensor 704.

Figure 9 shows an authentication method that is based on an authentication object or label (cf. fig. 1 and 2) as explained above, in particular with reference to figures 1, 2 and 3. In step 900 e.g. an authentication card with an attached authentication label is inserted into a card reader. In step 902 the user is prompted to enter his or hers authentication code into the card reader, e.g. the code provided in step 306 of figure 3.

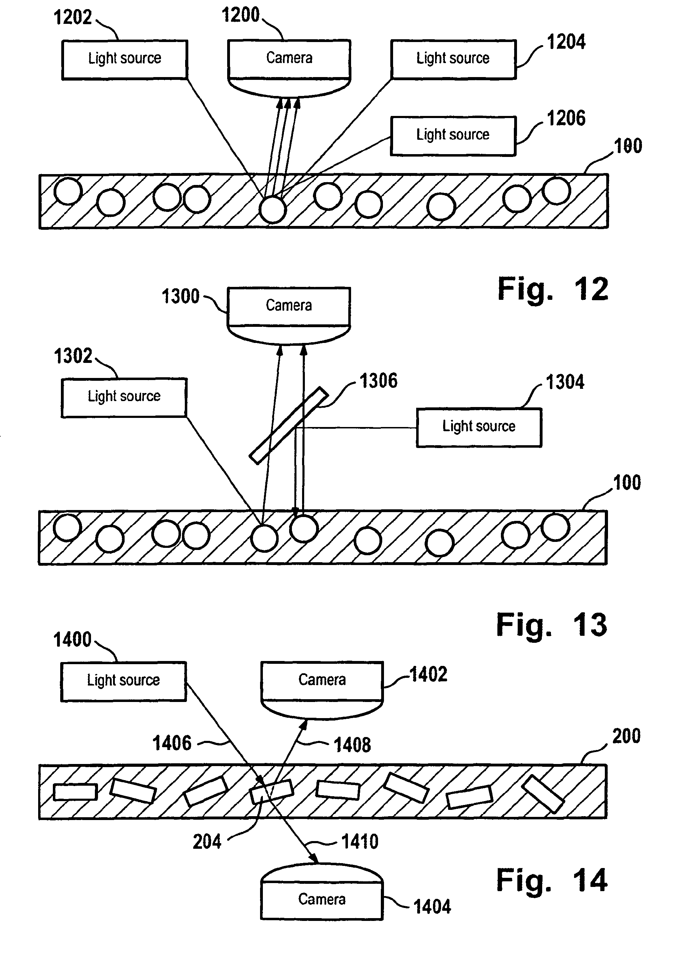

In step 904 the card reader makes a determination whether the authentication label has a three-dimensional pattern of particles or not. This can be done by various methods. Preferred embodiments of how this determination can be done will be explained in more detail by making reference to the figures 12, 13 and 14 below.

If it is determined in step 904 that there is no three-dimensional pattern of distributed particles in the authentication label, a corresponding refusal message is outputted by the card reader in step 906.

If the contrary is true, the authentication procedure goes on to step 908, where a two-dimensional data acquisition procedure on the authentication label is performed. As it has been determined before that there is in fact a three-dimensional distribution pattern of the particles it is sufficient to acquire the data from the authentication label in only two dimensions.

In step 910 the measurement data obtained from the data acquisition performed in step 908 is filtered to provide a check code in step 912. It is to be noted that steps 908 to 912 are substantially identical to steps 302 to 306 of figure 3. In case the authentication label is authentic the check code obtained in step 912 will be identical to the code obtained in step 306. This is checked in step 914.

In case the codes are not identical a refusal message is outputted by the card reader in step 916. If the codes are in fact identical an acceptance message is outputted in step 918 by the card reader. Alternatively an action is performed or enabled depending on the field of application of the authentication method, such as banking, access control, financial transaction, or copy protection.

Figure 10 illustrates a decryption method that corresponds to the encryption method of figure 4.

In step 1000 the matrix M is entered. In step 1002 data is acquired from the reference object. On this basis the reference data vector $\vec{\xi}'$ is obtained (step 1004). It is to be noted that the data acquisition step 400 of figure 4 and data acquisition step 1002 of figure 10 are substantially identical. However, in case the reference object is a physical object the data acquisition will involve some kind of measurement error.

As a consequence the raw data obtained from the measurements of the reference object will not be exactly the same in step 400 figure 4 and step 1002 of figure 10. As a consequence reference data vector $\vec{\xi}'$ provided in step 1004 will also not be identical to reference data vector $\vec{\xi}$ provided in step 402 of figure 4. Despite such differences between the reference data vector $\vec{\xi}$ that was used for the encoding and the reference data vector $\vec{\xi}'$ that forms the basis of the decoding, a correct decoding of the matrix M can be performed in order to obtain the 'hidden' bits $B_1$ ... $B_j$,... $B_l$ :

In step 1006 the index j is initialised. In step 1008 the scalar product of the reference data vector $\vec{\xi}'$ and the random vector in row j of matrix M that is assigned to bit $B_j$ is calculated. The sign of the scalar provides the decoded bit value $B_j$ whereby the same convention as for the encoding is used. In other words, when the sign is negative, the bit value is '0'; if the sign is positive the bit value $B_j$ is '1'.

In step 1010 the index j is incremented and the control goes back to step 1008 for decoding the next bit position. Steps 1008 and 1010 are carried out repeatedly until all I bit positions have been decoded. The decoded I bits are outputted in step 1012.

It is to be noted that the above described encryption and decryption methods are particularly advantageous as they are error tolerant in view of unavoidable measurement errors in the data acquisition from the reference object. Typically the reference data vectors used for the encryption and for the decryption will not be exactly the same but still a correct decryption result is obtained with a high degree of reliability and security.

In case the decoded I bits outputted in step 1012 are identical to the original bits that have been inputted in step 404 (cf. figure 4) the reference object is authentic, otherwise the reference object is refused.

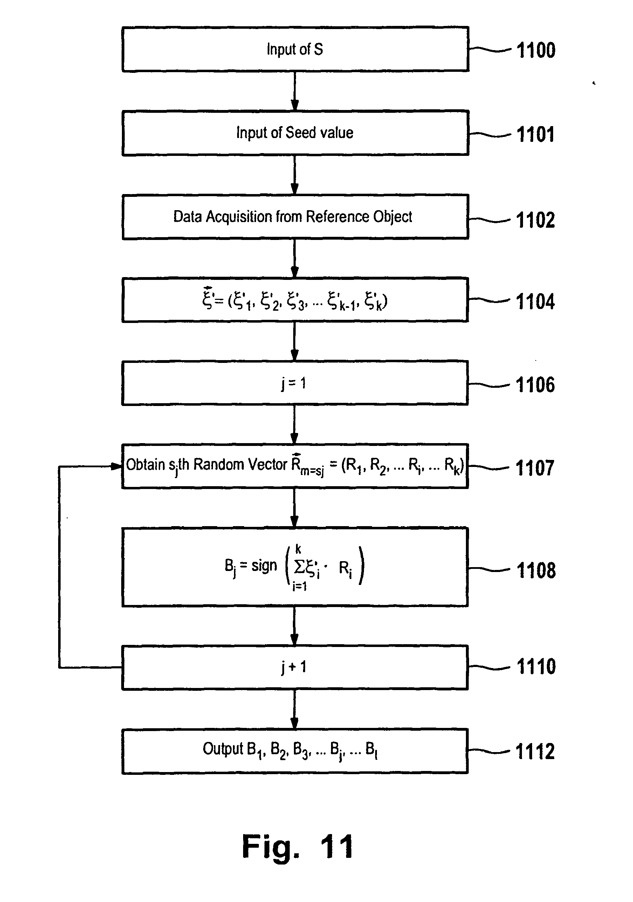

Figure 11 shows an alternative decryption method that is based on pseudo random vectors. The decryption method of figure 11 corresponds to encryption method of figure 6.

In step 1100 the sequence S is inputted. The seed value that was used for the encoding (cf. step 603 of figure 6) is inputted in step 1101. Steps 1102, 1104, 1106 are substantially identical to the corresponding steps 1002, 1004 and 1006 of figure 10.

In step 1107 a pseudo random generator that operates in accordance with the same algorithm as the pseudo random number generator that has been used for the encryption is used to recover the random vector $\vec{R}_{m=sj}$ based on the seed value entered in step 1101. This way the random vector that is represented by the running index $s_j$ in the sequence S is recovered.

The following step 1108 is identical to step 1008 of figure 10. In step 1110 the index j is incremented. From there the control returns to step 1107 for recovery of the consecutive random vector having the running index $s_j$ In step 1112 the result of the decoding is outputted.

Figure 12 shows authentication label 100 (cf. figure 1). In order to determine whether there is a three-dimensional pattern of particles within authentication label 100 or not three images of authentication label 100 are taken in a sequence by means of camera 1200. The first image is taken with diffuse light source 1202 switched on and diffuse light sources 1204 and 1206 switched off.

The second image is taken with light sources 1202 and 1206 switched off, while light source 1206 illuminates authentication label 100 from still another illumination angle.

The three images are combined to provide a resulting image. The combination can be done by digitally superimposing and adding the digital images. If there is in fact a three-dimensional distribution pattern of particles within authentication label regular geometric artefacts must be present in the resulting image. Such artefacts can be detected by a pattern recognition step. In the case of three light sources the geometric artefacts, which are produced, are triangles of similar size and shape. This effect is not reproducible by means of a two-dimensional copy of the original authentication label 100.

As an alternative, more than three light sources at different illumination angles can be used for taking a corresponding numbers of images, which are superposed and added. Changing the number of light sources also changes the shape of the geometric artefact in the resulting image.

Figure 13 shows an alternative method for determining the three-dimensionality of the distribution pattern of the particles within authentication label 100. For this application is required, that authentication label 100 is reflective. The underlying principle is that the reflective effect can not be reproduced by means of two-dimensional copy of the authentication label 100.

The test, whether authentication label 100 is in fact reflective or not, is done as follows: a first image is taken by camera 1300 with diffuse light source 1302 switched on. The diffuse light source 1302 will not invoke the reflective effect. The second image is taken with diffuse light source 1302 switched off and direct light source 1304 switched on.

By means of half mirror 1306 this produces an incident light beam, which is about perpendicular to the surface of authentication label 100. This light beam invokes the reflective effect. By comparing the first and the second images it is apparent whether authentication label 100 is reflective or not. This distinction can be made automatically by means of a relatively simple image processing routine.

Figure 14 shows a further alternative method of determining whether the distribution pattern of particles is three-dimensional or not. This method requires that the particles within authentication label 200 (cf. figure 2) are pearlescent pigments.

Presently, mica pigments coated with titanium dioxide and / or iron oxide are safe, stable and environmentally acceptable for use in coating, cosmetics and plastics. The pearlescent effect is produced by the behaviour of incident light on the oxide coated mica; partial reflection from and partial transmission through the platelets create a sense of depth. The colour of the transmitted light is complementary to the colour of the reflected light.

To check the presence of this colour effect, light source 1400 producing diffuse, white light and two cameras 1402 and 1404 are used. The cameras 1402 and 1404 are positioned at opposite sides of authentication label 200.

An incident light beam 1406 is partly reflected by particle 204 into reflected light beam 1408 and partly transmitted as transmitted light beam 1410. If the colours of reflected light beam 1408 and transmitted light beam 1410 are complementary this means that authentication label 200 could not have been produced by two-dimensional copying.

The test whether the colours of reflected light beam 1408 and transmitted light beam 1410 are complementary can be made by summing the colour coordinate values e.g. using the RGB colour coordinate system. The summation of the colour coordinates must result in roughly a constant RGB value.

Figure 15 shows optical disc 1550, such as a CD or DVD. Optical disc 1550 has an area 1552 that is covered by a data track. Outside area 1552, such as within an area 1554, an angularly shaped authentication label 1556 is glued to the surface of optical disc 1550 or integrated within optical disc 1550. Authentication label 1556 is similar to authentication label 100 of figure 1 or authentication label 200 of figure 2.

The data track of area 1552 stores encrypted data, such as audio and / or video data, multimedia data, and / or data files. In addition matrix M (cf. step 416 of figure 4) or sequence S (cf. step 616 of figure 6) and the seed value are stored in the data track without encryption. Alternatively a machine readable and / or human readable label is attached to optical disc 1550 with the matrix M or sequence S and seed value printed on it. Preferably the label is glued to the back side of optical disc 1550 or within inner area 1554.

When a user desires to use optical disc 1550, he or she puts optical disc 1550 into a player or disc drive. The player or disc drive reads the matrix M or the sequence S and seed value from the optical disc 1550. On this basis the authenticity of authentication label 1656 is checked by performing the method of figure 10 or 11, depending on the implementation. In case authentication label 1556 is in fact authentic the symmetric key is recovered and the encrypted mass data stored in the data track is decrypted in order to enable playback, rendering or opening of the files. Otherwise the key is not recovered and decryption of the mass data is not possible.

Figure 16 shows a block diagram .of reader 1600 that can be used as a playback device for optical disc 1550 (cf. figure 15). Elements of figure 15 that correspond to elements of figure 7 are designated by like reference numerals.

Reader 1600 has slot 1622 with a mechanism for insertion of optical disc 1550. Authentication label 1556 is attached to the surface of optical disc 1550 by an adhesive or it is integrated within the card. In the latter case the surface of optical disc 1550 must be transparent in order to enable to take an image of the surface of authentication label 1556. For example, optical disc 1550 is made of a flexible, transparent plastic that has a smooth outer surface and which envelops authentication label 1556.

Reader 1600 has at least one light source 1602 for illumination of authentication label 1556 when optical disc 1550 is inserted into slot 1622 (cf. the implementations of fig. 12 to 14).

Further, reader 1600 has optical sensor 1604, such as a CCD camera. Optical sensor 1604 is coupled to image processing module 1610 . Image processing module 1610 is equivalent to image processing module 710 of figure 7, i.e. it provides the same kind of two-dimensional data acquisition and filtering.

Image processing module 1610 is coupled to decryption module 1612. Decryption module 1612 serves to recover a symmetric key for decryption of mass data stored on optical disc 1550 by consecutive decryption module 1617. Decryption module 1617 is coupled to rendering module 1618.

Optical reader 1620 is coupled both to decryption module 1612 and decryption module 1617. Optical reader 1620 has a laser diode for directing a laser beam onto a surface of optical disc 1550 in order to read its data track.

If the method of figure 6 has been used for the encoding pseudo random number generator 1616 is required for the decryption.

Preferably light source 1602 and optical sensor 1604 implement any one of the arrangements of figures 12 to 14 as explained above.

In the following it is assumed that the matrix M or the sequence S and seed code are stored on the data track of optical disc 1550.

In operation optical disc 1550 is inserted into slot 1622. In response a determination is made by image processing module 1610 by means of light source 1602 and optical sensor 1604 where there is a three-dimensional distribution of particles within authentication label 1556 (cf. figures 12, 13 and 14).

If image processing module 1610 determines that there is in fact a three-dimensional particle distribution within authentication label 1556 it directs optical reader 1620 to read matrix M or sequence S and the seed value from the data track of the optical disc 1550. This information is entered into decryption module 1612.

Further, optical sensor 1604 acquires image data from authentication label 1556. The image data is filtered by image processing module 1610 and the resulting data vector $\xi'$ is entered into decryption module 1612. Decryption module 1612

List of Reference Numerals

| | |
|---|---|
| 100 | Authentication Label |
| 102 | Carrier Layer |

| 104 | Particles |
| 106 | Thickness |
| 108 | Adhesive Layer |
| 200 | Authentication Label |
| 202 | Carrier Layer |
| 204 | Particles |
| 206 | Thickness |
| 208 | Adhesive Layer |
| 700 | Image Processing and Encoding Apparatus |
| 702 | Light Source |
| 704 | Optical Sensor |
| 706 | Authentication Label |
| 708 | Position Makers |
| 710 | Image Processing Module |
| 712 | Encoding Module |
| 714 | Storage |
| 716 | Random Number Generator |
| 800 | Grid |
| 802 | Grid Element |
| 1200 | Camera |
| 1202 | Light Source |
| 1204 | Light Source |
| 1206 | Light Source |
| 1300 | Camera |
| 1302 | Diffuse Light Source |
| 1304 | Direct Light Source |
| 1306 | Half Mirror |
| 1401 | Light Source |
| 1402 | Camera |
| 1404 | Camera |
| 1406 | Light Beam |
| 1408 | Reflected Light Beam |
| 1410 | Transmitted Light Beam |
| 1550 | Optical Disk |
| 1552 | Area |
| 1554 | Inner Area |
| 1556 | Authentication Label |
| 1600 | Reader |
| 1550 | Optical Disk |
| 1552 | Area |
| 1554 | Inner Area |
| 1556 | Authentication Label |
| 1600 | Reader |
| 1602 | Light Source |
| 1604 | Optical Sensor |
| 1610 | Image Processing Module |
| 1612 | Decryption Module |
| 1616 | Random Number Generator |
| 1617 | Decryption Module |
| 1618 | Rendering Module |
| 1620 | Optical Reader |
| 1622 | Slot |

## Claims

**1.** A method of determining the authenticity of an object (100; 200; 706) comprising:

- receiving a first code,
- determining (904) if the object has a three-dimensional pattern of distributed particles,
- performing (908) a two-dimensional data acquisition for acquisition of a second code from the object,
- determining (914) the authenticity using the first and second codes;

said method being **characterised by** :

the determination if the object has a three-dimensional pattern of distributed particles being performed by:

- illuminating the object with diffused, white light (1406),
- detecting light reflected (1408) from the object and light transmitted (1410) through the object,
- determining if the reflected light and the transmitted light have complimentary colours.

2. The method of claim 2, further comprising:

- acquiring an image of the object (100; 200; 706) in a read position,
- determining a dislocation of the read position with respect to a reference position by detecting of marker (708) positions in the image,
- performing a projective transformation of the image for compensation of the dislocation.

3. The method of any one of the preceding claims, wherein the two-dimensional data acquisition is performed by scanning the object along a predefined two-dimensional grid (800).

4. The method of any one of the preceding claims, wherein the two-dimensional data acquisition step (908) is performed by acquiring an image of the object.

5. The method of any one of the preceding claims, further comprising filtering of measurement data acquired by the two-dimensional data acquisition in order to provide the second code.

6. The method of claim 5, wherein the filtering involves low pass filtering of the measurement data.

7. The method of claim 5 or 6, the filtering comprising a calculation of mean values of sub-sets of the measurement data.

8. The method of any one of the preceding claims, the first code comprising a set of random vectors and the second code being a data vector.

9. The method of claim 8, the random vectors being pseudo random, each random vector being represented by a running index, and further comprising entering a seed value for a pseudo random number generator in order to generate the random vectors on the basis of the seed value.

10. The method of claim 8 or 9, further comprising determining the signs of scalar products of each one of the random vectors and the data vector for generating a third code.

11. The method of claim 10, the third code being a check code for comparison with an authentication code.

12. The method of claim 10 or 11, the third code being a symmetric key.

13. The method of claim 12, the object belonging to a data carrier storing an encrypted file, the method further comprising decrypting the file by means of the symmetric key.

14. The method of claim 13, the first code being stored on the data carrier.

15. A computer program product for performing a method in accordance with any one of the preceding claims 1 to 14.

16. A logic circuit adapted to perform a method of any one of claims 1 to 14.

17. An electronic device for determining the authenticity of an object, the electronic device comprising:

- means for receiving a first code,
- means for determining (904) if the object has a three-dimensional pattern of distributed particles,
- means for performing (908) a two-dimensional data acquisition for acquisition of a second code from the object,
- means for determining (914) the authenticity on the basis of the first and second codes;

said device being **characterised by** :

the means for determining if the object has a three-dimensional pattern of distributed particles being adapted to perform the steps of:

- illuminating the object with diffused, white light (1406),
- detecting light reflected (1408) from the object and light transmitted (1410) through the object,
- determining if the reflected light and the transmitted light have complimentary colours.

18. The electronic device of claim 17, further comprising means for performing a projective transformation in order to compensate a dislocation of the object with respect to a reference position.

**Patentansprüche**

1. Ein Verfahren zum Bestimmen der Echtheit eines Objekts (100; 200; 706), das folgende Schritte aufweist:

- Empfangen eines ersten Codes,
- Bestimmen (904), ob das Objekt ein dreidimensionales Muster von verteilten Partikeln aufweist,
- Durchführen (908) einer zweidimensionalen Datenerfassung zur Erfassung eines zweiten Codes aus dem Objekt,
- Bestimmen (914) der Echtheit unter Verwendung des ersten und zweiten Codes;

wobei das Verfahren **gekennzeichnet ist durch**:

die Bestimmung, ob das Objekt ein dreidimensionales Muster von verteilten Partikeln aufweist, die durchgeführt wird **durch**:

- Beleuchten des Objekts mit gestreutem, weißem Licht (1406),
- Detektieren von Licht, das von dem Objekt reflektiert wird (1408), und Licht, das **durch** das Objekt durchgelassen wird (1410),
- Bestimmen, ob das reflektierte Licht und das durchgelassene Licht komplementäre Farben aufweisen.

2. Das Verfahren gemäß Anspruch 1, das ferner folgende Schritte aufweist:

- Erfassen eines Bildes des Objekts (100; 200; 706) in einer Leseposition,
- Bestimmen einer Versetzung der Leseposition mit Bezug auf eine Referenzposition durch ein Detektieren von Positionen eines Markierers (708) in dem Bild,
- Durchführen einer projektiven Umwandlung des Bildes zur Kompensation der Versetzung.

3. Das Verfahren gemäß einem der vorhergehenden Ansprüche, bei dem die zweidimensionale Datenerfassung durch ein Abtasten des Objekts entlang einem vorbestimmten zweidimensionalen Gitter (800) durchgeführt wird.

4. Das Verfahren gemäß einem der vorhergehenden Ansprüche, bei dem der Schritt der zweidimensionale Datenerfassung (908) durch ein Erfassen eines Bildes des Objekts durchgeführt wird.

5. Das Verfahren gemäß einem der vorhergehenden Ansprüche, das ferner ein Filtern von Messdaten, die durch die zweidimensionale Datenerfassung erfasst wurden, aufweist, um den zweiten Code zu liefern.

6. Das Verfahren gemäß Anspruch 5, bei dem das Filtern ein Tiefpassfiltern der Messdaten einschließt.

7. Das Verfahren gemäß Anspruch 5 oder 6, wobei das Filtern eine Berechnung von Mittelwerten von Teilsätzen der Messdaten aufweist.

EP 1 477 940 B1

**8.** Das Verfahren gemäß einem der vorhergehenden Ansprüche, wobei der erste Code einen Satz von Zufallsvektoren aufweist, und der zweite Code ein Datenvektor ist.

**9.** Das Verfahren gemäß Anspruch 8, wobei die Zufallsvektoren pseudozufällig sind, jeder Zufallsvektor durch einen Laufindex dargestellt wird und ferner ein Eingeben eines Startparameterwerts für einen Pseudozufallszahlengenerator aufweist, um die Zufallsvektoren anhand des Startparameterwertes zu generieren.

**10.** Das Verfahren gemäß Anspruch 8 oder 9, das ferner ein Bestimmen der Vorzeichen von Skalarprodukten von jedem der Zufallsvektoren und der Datenvektoren zum Generieren eines dritten Codes aufweist.

**11.** Das Verfahren gemäß Anspruch 10, wobei der dritte Code ein Prüfcode zum Vergleich mit einem Authentifizierungscode ist.

**12.** Das Verfahren gemäß Anspruch 10 oder 11, wobei der dritte Code ein symmetrischer Schlüssel ist.

**13.** Das Verfahren gemäß Anspruch 12, bei dem das Objekt zu einem Datenträger gehört, der eine verschlüsselte Datei speichert, wobei das Verfahren ferner ein Entschlüsseln der Datei mittels dem symmetrischen Schlüssel aufweist.

**14.** Das Verfahren gemäß Anspruch 13, wobei der erste Code auf dem Datenträger gespeichert wird.

**15.** Ein Computerprogrammprodukt zum Durchführen eines Verfahrens gemäß einem der vorhergehenden Ansprüche 1 bis 14.

**16.** Eine Logikschaltung, die angepasst ist, um ein Verfahren gemäß einem der Ansprüche 1 bis 14 durchzuführen.

**17.** Eine elektronische Vorrichtung zum Bestimmen der Echtheit eines Objekts, wobei die elektronische Vorrichtung folgende Merkmale aufweist:

- eine Einrichtung zum Empfangen eines ersten Codes,
- eine Einrichtung zum Bestimmen (904), ob das Objekt ein dreidimensionales Muster von verteilten Partikeln aufweist,
- eine Einrichtung zum Durchführen (908) einer zweidimensionalen Datenerfassung zur Erfassung eines zweiten Codes aus dem Objekt,
- eine Einrichtung zum Bestimmen (914) der Echtheit anhand des ersten und zweiten Codes;

wobei die Vorrichtung **gekennzeichnet ist durch**:

die Einrichtung zum Bestimmen, ob das Objekt ein dreidimensionales Muster von verteilten Partikeln aufweist, die angepasst ist, um die folgenden Schritte durchzuführen:

- Beleuchten des Objekts mit gestreutem, weißem Licht (1406),
- Detektieren von Licht, das von dem Objekt reflektiert wird (1408), und Licht, das **durch** das Objekt durchgelassen wird (1410),
- Bestimmen, ob das reflektierte Licht und das durchgelassene Licht komplementäre Farben aufweisen.

**18.** Die elektronische Vorrichtung gemäß Anspruch 17, die ferner eine Einrichtung zum Durchführen einer projektiven Umwandlung aufweist, um eine Versetzung des Objekts mit Bezug auf eine Referenzposition zu kompensieren.

**Revendications**

**1.** Procédé de détermination de l'authenticité d'un objet (100 ; 200 ; 706) comprenant :

- la réception d'un premier code,
- une détermination (904) permettant de savoir si l'objet présente un motif tridimensionnel de particules distribuées,
- l'exécution (908) d'une acquisition de données bidimensionnelles pour acquérir un deuxième code à partir de l'objet,

12

- la détermination (914) de l'authenticité en utilisant les premier et deuxième codes ;
ledit procédé étant **caractérisé par** :

une détermination permettant de savoir si l'objet présente un motif tridimensionnel de particules distribuées, exécutée par :

- une illumination de l'objet avec une lumière blanche et diffusée (1406),
- une détection de la lumière réfléchie (1408) par l'objet et de la lumière transmise (1410) à travers l'objet,
- une détermination permettant de savoir si la lumière réfléchie et la lumière transmise présentent des couleurs complémentaires.

2. Procédé selon la revendication 2, comprenant de plus :

- l'acquisition d'une image de l'objet (100 ; 200 ; 706) dans une position de lecture,
- une détermination d'une dislocation de la position de lecture par rapport à une position de référence en détectant des positions de marqueur (708) dans l'image,
- l'exécution d'une transformation projective de l'image pour procéder à une compensation de la dislocation.

3. Procédé selon l'une quelconque des revendications précédentes, dans lequel l'acquisition de données bidimensionnelles est exécutée en numérisant l'objet le long d'une grille bidimensionnelle prédéfinie (800).

4. Procédé selon l'une quelconque des revendications précédentes, dans lequel l'étape d'acquisition de données bidimensionnelles (908) est exécutée en acquérant une image de l'objet.

5. Procédé selon l'une quelconque des revendications précédentes, comprenant de plus un filtrage des données de mesure acquises grâce à l'acquisition des données bidimensionnelles afin de fournir le deuxième code.

6. Procédé selon la revendication 5, dans lequel le filtrage implique un filtrage passe-bas des données de mesure.

7. Procédé selon l'une quelconque des revendications 5 ou 6, dans lequel le filtrage comprend un calcul des valeurs moyennes de sous-ensembles des données de mesure.

8. Procédé selon l'une quelconque des revendications précédentes, dans lequel le premier code comprend un ensemble de vecteurs aléatoires et le deuxième code est un vecteur de données.

9. Procédé selon la revendication 8, dans lequel les vecteurs aléatoires sont pseudo aléatoires, chaque vecteur aléatoire étant représenté par un index courant, et comprenant de plus l'entrée d'une valeur de graine pour un générateur de nombres pseudo aléatoires afin de générer des vecteurs aléatoires sur la base de la valeur de graine.

10. Procédé selon l'une quelconque des revendications 8 ou 9, comprenant de plus la détermination des signes des produits scalaires de chacun des vecteurs aléatoires et du vecteur de données pour générer un troisième code.

11. Procédé selon la revendication 10, dans lequel le troisième code est un code de contrôle de la comparaison avec un code d'authentification.

12. Procédé selon l'une quelconque des revendications 10 ou 11, dans lequel le troisième code est une clé symétrique.

13. Procédé selon la revendication 12, dans lequel l'objet appartient à un support de données qui stocke un fichier chiffré, le procédé comprenant de plus le déchiffrement du fichier au moyen de la clé symétrique.

14. Procédé selon la revendication 13, dans lequel le premier code est stocké sur le support de données.

15. Produit de programme informatique pour exécuter un procédé selon l'une quelconque des revendications 1 à 14.

16. Circuit logique adapté pour exécuter un procédé selon l'une quelconque des revendications 1 à 14.

17. Dispositif électronique pour déterminer l'authenticité d'un objet, le dispositif électronique comprenant :

- des moyens de réception d'un premier code,
- des moyens de détermination (904) permettant de savoir si l'objet présente un motif tridimensionnel de particules distribuées,
- des moyens d'exécution (908) d'une acquisition de données bidimensionnelles pour acquérir un deuxième code à partir de l'objet,
- des moyens de détermination (914) de l'authenticité sur la base du premier et du deuxième codes ; ledit dispositif étant **caractérisé par** :

les moyens de détermination permettant de savoir si l'objet présente un motif tridimensionnel de particules distribuées, étant adaptés pour exécuter les étapes consistant à :

- illuminer l'objet avec une lumière blanche et diffusée (1406),
- détecter la lumière réfléchie (1408) par l'objet et la lumière transmise (1410) à travers l'objet,
- déterminer si la lumière réfléchie et la lumière transmise présentent des couleurs complémentaires.

18. Dispositif électronique selon la revendication 17, comprenant de plus des moyens pour exécuter une transformation projective afin de compenser une dislocation de l'objet par rapport à une position de référence.

EP 1 477 940 B1

Fig. 1

Fig. 2

| Providing of object having three-dimensional pattern of randomly distributed particles | 300 |
| Performing 2D data acquisition | 302 |
| Filtering of measurement data | 304 |
| Code | 306 |

Fig. 3

15

| | |
|---|---|
| Data Acquisition from Reference Object | 400 |

↓

| | |
|---|---|
| $\vec{\xi} = (\xi_1, \xi_2, \xi_3, \dots \xi_i, \dots \xi_{k-1}, \xi_k)$ | 402 |

↓

| | |
|---|---|
| Input of I bits $B_1, B_2, B_3, \dots B_j, \dots B_I$ to be encrypted | 404 |

↓

| | |
|---|---|
| $j = 1$ | 406 |

↓

| | |
|---|---|
| Input of random vector $\vec{R} = (R_1, R_2, \dots R_i, \dots R_k)$ | 408 |

↓

Are the following conditions fulfilled ? — 410

$$\varepsilon \le \left| \sum_{i=1}^{k} \xi_i \cdot R_i \right| \quad \text{and} \quad B_j = \text{sign} \left( \sum_{i=1}^{k} \xi_i \cdot R_i \right)$$

no

yes

↓

| | |
|---|---|
| Row j of Matrix M = $\vec{R}$ | 412 |

↓

| | |
|---|---|
| $j + 1$ | 414 |

↓

| | |
|---|---|
| Output M | 416 |

# Fig. 4

$$M = \begin{vmatrix} R_1^1 & R_2^1 & \cdots & R_{k-1}^1 & R_k^1 \\ R_1^2 & R_2^2 & \cdots & R_{k-1}^2 & R_k^2 \\ \vdots & & & & \\ R_1^j & R_2^j & \cdots & R_{k-1}^j & R_k^j \\ \vdots & & & & \\ R_1^{l-1} & R_2^{l-1} & \cdots & R_{k-1}^{l-1} & R_k^{l-1} \\ R_1^l & R_2^l & \cdots & R_{k-1}^l & R_k^l \end{vmatrix}$$

# Fig. 5

```
┌────────────────────────────────────────────┐
│     Data Acquisition from Reference Object   │──── 600
└────────────────────────────────────────────┘
                    ↓
┌────────────────────────────────────────────┐
│   ξ⃗ = (ξ₁, ξ₂, ξ₃, ... ξᵢ, ... ξₖ₋₁, ξₖ)    │──── 602
└────────────────────────────────────────────┘
                    ↓
┌────────────────────────────────────────────┐
│  Input of Seed value for Random Number Generator │──── 603
└────────────────────────────────────────────┘
                    ↓
┌────────────────────────────────────────────┐
│      Input of symmetric key of length l      │──── 604
│   B₁, B₂, B₃, ... Bⱼ, ... Bₗ to be encrypted │
└────────────────────────────────────────────┘
                    ↓
┌────────────────────────────────────────────┐
│                   j = 1                      │──── 606
└────────────────────────────────────────────┘
                    ↓
┌────────────────────────────────────────────┐
│                   m = 1                      │──── 607
└────────────────────────────────────────────┘
                    ↓
┌────────────────────────────────────────────┐
│ Input of random vector from Random Number Generator │──── 608
│      R⃗ₘ = (R₁, R₂, ... Rᵢ, ... Rₖ)          │
└────────────────────────────────────────────┘
```

$$\varepsilon \le \left| \sum_{i=1}^{k} \xi_i \cdot R_i \right| \quad \text{and} \quad B_j = \text{sign}\left( \sum_{i=1}^{k} \xi_i \cdot R_i \right)$$

610

?

no

yes

$$s_j = m$$   612

$$j + 1$$   614

$$\text{Output } S = (s_1, s_2, ... s_j, ... s_l)$$   616

# Fig. 6

18

**Fig. 7**

Fig. 8

```
┌─────────────────────────────────────────────────┐
│        Authentication label in Reader           │──── 900
└─────────────────────────────────────────────────┘
                        │
                        ▼
┌─────────────────────────────────────────────────┐
│   User is prompted to enter Authentication Code  │──── 902
└─────────────────────────────────────────────────┘
                        │
                        ▼
              ╱────── 904                    ┌──────────────┐
          ╱   Three-dimensional   ╲    no    │              │──── 906
          ╲   pattern ?           ╱  ──────▶ │   Refusal    │
              ╲──────                         └──────────────┘
                   │ yes
                   ▼
┌─────────────────────────────────────────────────┐
│        Performing 2D data acquisition           │──── 908
└─────────────────────────────────────────────────┘
                        │
                        ▼
┌─────────────────────────────────────────────────┐
│         Filtering of measurement data           │──── 910
└─────────────────────────────────────────────────┘
                        │
                        ▼
┌─────────────────────────────────────────────────┐
│                  Check code                      │──── 912
└─────────────────────────────────────────────────┘
                        │
                        ▼
              ╱────── 914                    ┌──────────────┐
          ╱   Check code =       ╲    no     │              │──── 916
          ╲   Authentication code ╱ ──────▶  │   Refusal    │
              ╲   ?   ──────                  └──────────────┘
                   │ yes
                   ▼
┌─────────────────────────────────────────────────┐
│                  Acceptance                      │──── 918
└─────────────────────────────────────────────────┘
```

**Fig. 9**

EP 1 477 940 B1

Fig. 10

```
┌─────────────────────────────────────────────┐
│              Input of S                       │──── 1100
└─────────────────────────────────────────────┘
                     │
                     ▼
┌─────────────────────────────────────────────┐
│            Input of Seed value                │──── 1101
└─────────────────────────────────────────────┘
                     │
                     ▼
┌─────────────────────────────────────────────┐
│     Data Acquisition from Reference Object    │──── 1102
└─────────────────────────────────────────────┘
                     │
                     ▼
┌─────────────────────────────────────────────┐
│   ξ' = (ξ'₁, ξ'₂, ξ'₃, ... ξ'ₖ₋₁, ξ'ₖ)        │──── 1104
└─────────────────────────────────────────────┘
                     │
                     ▼
┌─────────────────────────────────────────────┐
│                  j = 1                        │──── 1106
└─────────────────────────────────────────────┘
                     │
                     ▼
┌─────────────────────────────────────────────┐
│ Obtain sⱼth Random Vector R̄ₘ₌ₛⱼ = (R₁, R₂, ... Rᵢ, ... Rₖ)│──── 1107
└─────────────────────────────────────────────┘
                     │
                     ▼
┌─────────────────────────────────────────────┐
│                                               │
│     Bⱼ = sign ( Σᵢ₌₁ᵏ ξ'ᵢ · Rᵢ )              │──── 1108
│                                               │
└─────────────────────────────────────────────┘
                     │
                     ▼
┌─────────────────────────────────────────────┐
│                 j + 1                         │──── 1110
└─────────────────────────────────────────────┘
                     │
                     ▼
┌─────────────────────────────────────────────┐
│    Output B₁, B₂, B₃, ... Bⱼ, ... Bₗ         │──── 1112
└─────────────────────────────────────────────┘
```

$$\vec{\xi}' = (\xi'_1, \xi'_2, \xi'_3, \ldots \xi'_{k-1}, \xi'_k)$$

$$\text{Obtain } s_j\text{th Random Vector } \vec{R}_{m=sj} = (R_1, R_2, \ldots R_i, \ldots R_k)$$

$$B_j = \text{sign}\left(\sum_{i=1}^{k} \xi'_i \cdot R_i\right)$$

$$\text{Output } B_1, B_2, B_3, \ldots B_j, \ldots B_l$$

# Fig. 11

1202

1200

1204

Light source

Camera

Light source

1206

Light source

100

**Fig. 12**

1300

Camera

1302

1306

1304

Light source

Light source

100

**Fig. 13**

1400

Light source

Camera

1402

1406

1408

200

204

1410

Camera

1404

**Fig. 14**

Fig. 15

**Fig. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5145212 A
- WO 08707034 A
- GB 2093404 A
- US 4661983 A

- US 5856070 A
- US 4218674 A
- WO 0157831 A1
- WO 0250790 A1